# EUROPEAN PATENT APPLICATION

(11) **EP 2 779 682 A2**
(43) Date of publication of application: **17.09.2014**
(21) Application number: 14158746.9
(22) Date of filing: 11.03.2014
(51) Int. Cl.: H04N 21/6334, H04N 21/414, H04N 21/8355, H04N 21/4627, H04N 21/41, H04N 21/4784, H04N 21/222, H04N 21/4363

(54) **Method for acquiring access rights to a product or a service and system for implementing this method**

(30) Priority: 11.03.2013 US 201361775737 P
(71) Applicant: Nagravision S.A., 1033 Cheseaux-sur-Lausanne (CH)
(72) Inventor: Potterat, Laurent, 1110 Morges (CH)
(74) Representative: Leman Consulting S.A.

(57) **Abstract**

A method of acquiring access rights to a product or a service. The method comprises receiving an access right to a service and/or a product by a multimedia unit, said right being sent by a right provider; transmitting said access right from said multimedia unit to a mobile terminal, said transmission using a near field communication; and storing said right in a memory of the mobile terminal.

## Description

### TECHNICAL FIELD

The present invention concerns a method for acquiring access rights to a product or a service. It further concerns a system for implementing this method.

More specifically, the invention concerns a method of acquiring rights that corresponds to a "gift" made by a provider to at least one user, said gift being received by a user's multimedia unit and transferred to a user's mobile terminal prior to being used or prior to being usable. This methods use near field communication (NFC) technology.

### BACKGROUND

Near Field Communication Technology, known under the acronym "NFC", is a wireless, high frequency communication technology having a range of a few centimeters, for the exchange of information between multiple devices. This technology is derived from a combination of a smart card interface and a contactless reader in a single device.

A NFC device is able to communicate with other NFC devices as well as devices meeting ISO 14443 standards such as e.g., contactless smart cards.

The standards cover the NFC communication protocols and data exchange formats and are based on existing standards for radio frequency identification (RFID) as ISO / IEC 14443, FeliCa and ISO / IEC 18092. They include standards defined by the "NFC Forum " which was founded in 2004 by Nokia, Philips and Sony and includes now more than 180 members.

NFC is an extension of RFID technology, allowing two-way communication between two devices, while previous systems, such as contactless smart cards, allowed only one-way communication.

NFC technology is usable only over a short distance of a few centimeters, which implies a voluntary use and prevents unintentional use.

NFC devices may be active or passive. A passive device, such as a tag, a smart card or a simple chip affixed to an object contains information that is only readable by other NFC-enabled devices. A passive device is powered by the electromagnetic field generated by a reader (active device) and therefore does not need its own power supply.

An active device instead is one that generates an electromagnetic field. This generation can be done to communicate with a passive device (as described above) or to establish a communication channel between two active devices.

The fact that a device like a smartphone has a power supply does not necessarily mean that it will work in active mode only. A smartphone can handle the NFC interface in active or passive mode. In passive mode, the smartphone emulates a chip card and stores, in a secure memory, the information usually stored in the chip card. Thus, when the smartphone detects an electromagnetic field, it can access the secure memory and a corresponding device having NFC capacities will be able to read information in passive mode from the secure memory.

The following are examples of known applications that use NFC technology:
- payment using a credit card or contactless mobile device (e.g., mobile phone, smartphone, laptop, tablet computer, etc.) on a contactless payment terminal;
- payment for a parking space on a terminal accepting contactless payment using an NFC mobile terminal;
- contactless purchase of a ticket and contactless validation of a ticket displayed on a mobile phone;
- management of coupons, loyalty points, etc. in a store, at retailers, etc. (e.g., couponing);
- accessing and starting a vehicle using a mobile phone;
- reading product information (e.g., price, composition, allergy, etc.) in a store;
- controlling physical access to premises (e.g., meeting room, business, classroom, etc.);
- exchanging profiles between users of a social network or of a game by bringing phones close together (e.g., user peer-to-peer communication) ;
- reading an electronic business card with a personal digital assistant (PDA);
- synchronizing Internet bookmarks and contacts between a PDA and a mobile phone;
- recovering key to a WiFi access point approaching an NFC device from an authorized terminal; and
- accessing automation features of a building.

### SUMMARY OF THE INVENTION

Among the different possible applications of NFC technology, some of them concern the storage and the transfer of rights. In the embodiments disclosed herein, NFC technology is used, in connection with a first terminal that receives rights, to store and to transfer rights to a second terminal and to use the rights at a remote place.

Objects of the disclosed invention are achieved by a method of acquiring access rights to a product or a service, said method comprising the steps of:
- receiving by a multimedia unit, an access right to a service and/or a product, said right being sent by a right provider; and
- transmitting said access right from said multimedia unit to a mobile terminal, said transmission using a near field communication technology.

The disclosed embodiments are suitable for use when a user has at least a multimedia unit and a mobile terminal. The multimedia unit can be e.g., a TV set, set top box, computer having a mechanism for receiving content, digital tablet, etc. The mobile terminal can be a tablet, smartphone or a PDA. The multimedia unit as well as the mobile terminal are able to communicate via NFC (Near Field Communication) technology.

The method disclosed herein uses NFC communications to transfer rights or pieces of information from the multimedia unit to the mobile device. This forces the mobile device to be in close proximity to the multimedia unit. In addition, greater security is achieved as it is difficult to illegally copy NFC communications due to the short distance of the communications.

### BRIEF DESCRIPTION OF THE DRAWINGS

The invention disclosed herein and its advantages will be better understood with reference to the enclosed drawings and to the following detailed description, in which:

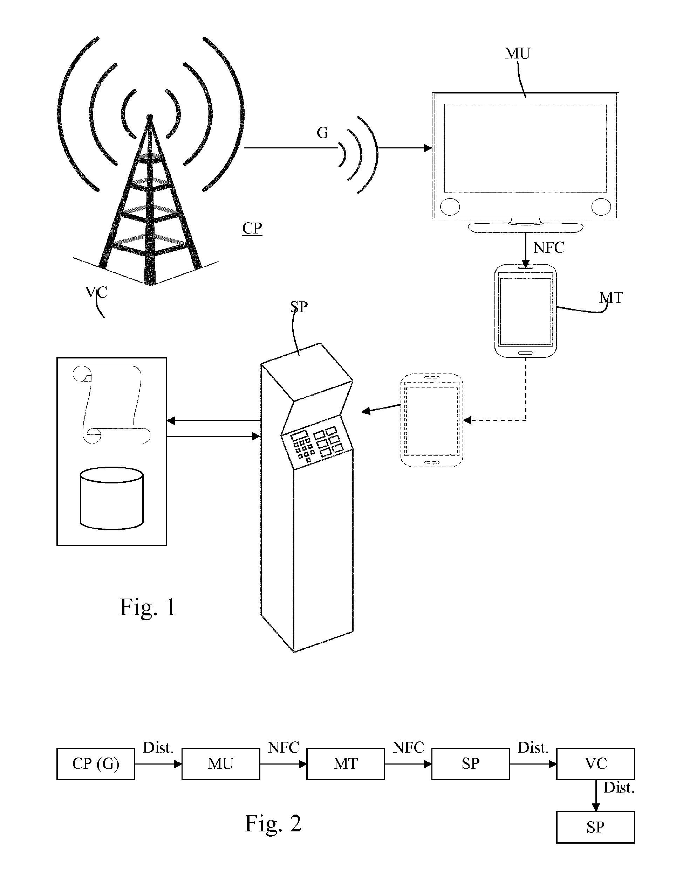

Fig. 1 is a schematic view of a system and devices used for implementing the method disclosed herein; and
Fig. 2 is a block diagram of the method disclosed herein.

### DETAILED DESCRIPTION OF THE INVENTION

The method disclosed herein is used by a user having at least one multimedia unit MU or user unit and one mobile terminal MT. The multimedia unit is able to receive data, content and information sent from a content provider CP or a management center.

The disclosed embodiments may propose gifts to a user. Such gifts could be for example a free sample of a product, reduction coupons, access rights to an event, etc. A gift could be used e.g., in a shop, at a restaurant, in a movie theater or at a place of entertainment.

According to the disclosed principles, a gift G or data representing a gift is sent from the content provider CP or the management center to the user's multimedia unit MU. In the present example, the gift can be sent directly to the multimedia unit, which means that the gift is a right that can be used directly.

According to an alternative embodiment, the gift is not sent directly; instead, an identifier of the gift is sent. In this case, prior to using the gift, it is necessary to send the gift's identifier to an entity having a database containing gift's identifiers associated with rights corresponding to the gifts. The right is sent in response to the reception of a gift's identifier.

As both embodiments are substantially equivalent, the following description uses the words "gift" or "right" and "piece of information representing a gift" interchangeably.

The gift is sent in the form of a message such as an entitlement management message (EMM) and can be sent to a single user or to a group of users. The message containing the gift is sent by conventional communication means such as e.g., broadcast or an IP connection for example.

Depending on the level of security, the message can be sent encrypted or unencrypted. When the message is encrypted, the encryption key can be a key common to a group of users or, conversely, a key that is specific to each user or each user unit. It should be noted that the user or user units should be registered at the management center prior to receiving a gift; this enables the management center to set a key or a key pair for communicating with each registered multimedia unit.

Once a message containing a gift is received from the management center or the content provider, the processing of the message depends on whether the message is encrypted or not and whether the multimedia unit has encryption/decryption capabilities or not.

In a first embodiment, it is presumed that the message is encrypted and that the multimedia unit has decryption capabilities. In this case, the message received by the multimedia unit from the content provider is decrypted by the multimedia unit and stored in the unit. It should be noted, however, that the message or the gift can also be stored encrypted. For example, the message or gift can be decrypted prior to being transmitted to the mobile terminal.

In order to be used, the gift G, or the corresponding piece of information, must be transferred from the multimedia unit MU to the mobile terminal MT of the user. This transfer uses NFC capabilities that are present on the multimedia unit MU as well as on the mobile terminal. For this transfer, the mobile terminal is placed in close proximity to the multimedia unit and a near field communication is initiated. In this embodiment, either the gift is stored decrypted or it is decrypted before the transfer to the mobile terminal. The transfer is then made with the decrypted right. The risk of illegal interception of the right is low as NFC communications have a communication range of only a few centimeters. The transfer could be done with an encrypted right, i.e., the right decrypted by the multimedia unit and re-encrypted with another key. This technique could be used or desired in order to force the multimedia unit and the mobile terminal to be paired.

Once the transfer is done, the right, gift or piece of information identifying the gift is stored in the mobile terminal. The gift can be used to gain access to e.g., a product, service or a discount.

In order to use this right, the mobile terminal must be brought to a terminal of a service provider SP, which connects itself to a verification center VC. The connection to the verification center may use different communication methods. In a desired embodiment, the mobile terminal storing the gift or the corresponding piece of information approaches the terminal SP, said terminal having NFC capabilities. The terminal is for example in a premises belonging to the service provider, in a public area, at the entrance of an event, etc. depending on the type of gift. The gift or gift identifier is then transferred via NFC from the mobile terminal to the terminal of the service provider. The gift identifier received from the mobile terminal is sent to the verification center via conventional communication methods. Said communication methods can use e.g., an IP connection or a GSM network. The verification center verifies the authenticity of the gift. This verification can be done according to several methods. In one method, the piece of information corresponding to a gift comprises a first part that identifies the gift, and a second part that is a digest of the first part. This digest can be obtained by using a key that is known to the verification center. Thus, when receiving a gift or a corresponding piece of information, the verification center can check if said data is authentic or not.

The verification center also verifies if the right has already been used or not. If the conditions for benefiting from the gift are fulfilled, a validation message is sent to the service provider who can offer the service corresponding to the gift. Said conditions could be e.g., that the gift is authentic and that it has not already been used.

According to an alternative embodiment, the multimedia unit MU is not adapted to decrypt and encrypt the message received from the content provider CP. If the message containing the gift is encrypted, the message can be transferred in encrypted format from the multimedia unit MU to the mobile terminal MT. As discussed above, the message is transferred from the multimedia unit to the mobile terminal by NFC. In this embodiment, however, the multimedia unit does not play an "active" role on the message, i.e., the message is not processed by the multimedia unit. This multimedia unit receives the message and forwards it without any modification.

If the mobile terminal MT is registered at the content provider CP, the content provider will have a key that is common with the mobile terminal. Thus, the mobile terminal is able to decrypt the message received from the content provider via the multimedia unit. Once the message is decrypted, it can be validated by the verification center as explained above.

According to another embodiment, the gift can be sent to the multimedia unit unencrypted. In this case, the multimedia unit can transfer the gift to the mobile terminal unencrypted, through NFC or encrypted if pairing is desired.

In all these cases, the right, once validated by the validation center, may be used in a conventional way. Rights can be possibly granted manually by a person e.g., for a discount, physical gift, etc. The right can also be granted automatically, for example, when needed for physical access to an event or a premise.

According to a desired embodiment, once a right is used (i.e., transferred from the multimedia unit to the mobile terminal), this right is deleted from the multimedia unit or marked as not being usable anymore. This technique prevents a user from using the same gift several times, for example, on several different devices.

According to another embodiment, it is possible to allow a right to be used several times, either a limited number of times or an unlimited number of times or during a predefined period. The choice of the implementation is free and can be made by the rights provider.

## Claims

1. A method of acquiring access rights to a product or a service, said method comprising the steps of:
- receiving, by a multimedia unit, an access right to the a service and/or a product, said right being sent by a rights provider; and
- transmitting said access right from said multimedia unit to a mobile terminal, said transmission using a near field communication.

2. The method according to claim 1, wherein the right is marked as transferred when this right has been transferred from the multimedia unit to the mobile terminal.

3. The method according to claim 1, wherein the right is deleted from the multimedia unit when this right has been transferred from the multimedia unit to the mobile terminal.

4. The method according to claim 1, wherein the right is linked to conditions of use.

5. The method according to claim 4, wherein one condition of use is a duration of use.

6. The method according to claim 1, wherein one condition of use is a number of uses.

7. A system for acquiring access rights to a product or a service, said system comprising:
- a multimedia unit, said multimedia unit receiving an access right to the service and/or a product from a rights provider and
- transmitting said access right to a mobile terminal, said transmission using a near field communication.

8. The system of claim 7, wherein the right is marked as transferred when this right has been transferred from the multimedia unit to the mobile terminal.

9. The system of claim 7, wherein the right is deleted from the multimedia unit when the right has been transferred from the multimedia unit to the mobile terminal.

10. The system of claim 7, wherein the right is linked to conditions of use.

11. The system of claim 10, wherein one condition of use is a duration of use.

12. The system of claim 10, wherein one condition of use is a number of uses.
